# EUROPÄISCHE PATENTANMELDUNG

(11) **EP 2 924 664 A1**
(43) Veröffentlichungstag der Anmeldung: **30.09.2015**
(21) Anmeldenummer: 15000802.7
(22) Anmeldetag: 18.03.2015
(51) Int. Cl.: G07C 9/00

(54) **Handsender**

(30) Priorität: 25.03.2014 DE 102014004426
(71) Anmelder: Novoferm tormatic GmbH, 44309 Dortmund (DE)
(72) Erfinder: Glanz, Michael, 40764 Langenfeld (DE); Kuhn, Nora, 59581 Warstein (DE); Hamacher, Michael, 58256 Ennepetal (DE); Deicke, Jonas, 44263 Dortmund (DE)

(57) **Zusammenfassung**

Die Erfindung betrifft einen drahtlosen, mittels mindestens eines Funksignals zu betreibenden Handsender (1, 51) zur Kommunikation mit einem Empfänger einer Antriebseinheit, die einem Gebäudeverschluss, vorzugsweise einem Tor zugeordnet ist, wobei der Handsender im Wesentlichen aus einem zweiteiligen Gehäuse mit einer Deckplatte (3) und damit lösbar verbundenen Rückplatte (4) besteht, wobei innerhalb des Gehäuses eine Platine (25) enthalten ist, auf der Tastelemente (28, 29, 48, 49) angeordnet sind, die durch in einem Zwischenstück (26) integrierte Bedienelemente (5, 6, 45, 46) beaufschlagbar sind, wobei die Bedienelemente (5, 6, 45, 46) an der Oberfläche der Deckplatte (3) austreten, und dass die Platine (25) eine Halterung (24) für eine auswechselbare Stromversorgung (23) aufweist, und dass die Deckplatte (3) und die Rückplatte (4) umfassend mit einem rahmenförmigen Verbindungsteil (19, 44) umgeben ist.

## Beschreibung

Die Erfindung betrifft einen drahtlosen, mittels mindestens eines Funksignals zu betreibenden Handsenders, der Bedienelemente zur Kommunikation enthält und für einen automatisierten Gebäudeverschluss in Form von Toren, Türen oder dergleichen, eingesetzt wird.

Durch die DE 20 2005 017 315 U1 ist ein drahtloser, mittels eines Funktionssignals zu betreibender Handsender, für eine mit einem Empfänger ausgestattete Vorrichtung, einer Tür oder dergleichen, mit an einer Oberseite vorhandenen Funktionstasten zur Kommunikation durch einen Sender mit dem Empfänger und mindestens einer auswechselbaren Batterie, bekannt geworden, wobei der Handsender ein zweiteiliges Gehäuse aufweist, bestehend aus einem Funktionsteil und einer Abdeckung, wobei das Funktionsteil und die Abdeckung untereinander durch eine seitliche Schiebebewegung miteinander verbunden werden, und dass eine Oberseite und eine Unterseite des Funktionsteils jeweils mit einem Vorsprung, der eine Kontur aufweist, ausgestattet ist/sind, und dass innerhalb der Abdeckung ein Ausschnitt vorhanden ist, der eine komplementäre Form mit der Oberseite und/oder der Unterseite des Funktionsteils aufweist.

Die Aufgabe der Erfindung besteht darin, einen Handsensor zu schaffen, der in den Herstellkosten gesenkt werden kann und gleichzeitig ein schlichtes Aussehen aufweist und verschiedene Funktionen ausführen kann.

Die Aufgabe der Erfindung wird durch die Merkmale der Ansprüche 1 und 2 gelöst. Dabei geben die Unteransprüche eine weitere Ausgestaltung des erfindungsgemäßen Gedankens wieder.

Der erfindungsgemäße Handsender zeichnet sich durch eine klare rechteckige Form aus, bei der die Seitenränder zueinander im Wesentlichen parallel verlaufen und die Oberflächen und die Seitenflächen frei von Vorsprüngen oder dergleichen sind. Innerhalb des Handsenders vorhandene Bedienelemente sind so ausgebildet, dass diese aus der Oberfläche des Handsenders nicht hervorstehen. Dabei wird vorzugsweise auf sogenannte Folientastaturen zurückgegriffen.

Die Lösung der Erfindung besteht in mehreren unterschiedlichen Lösungsansätzen, wobei grundsätzlich eine obere Deckplatte und andererseits eine Rückplatte in Verwendung mit einem seitlich an den Rändern umgreifenden Verbindungsteil vorhanden ist.

In einer ersten bevorzugten Ausführungsform besteht der Handsender im Wesentlichen aus einem zweiteiligen Gehäuse mit der Deckplatte und damit lösbar verbundenen Rückplatte. Dabei ist allein diese Ausgestaltung der Erfindung schon funktionsfähig, da zwischen der Deckplatte und der Rückplatte neben den Bedienelementen eine elektronische Platine vorhanden ist, die unter anderem Taster beinhaltet, die durch die Folientastaturen betätigt werden können. An einer Stirnseite ist eine Öffnung vorhanden, die es zulässt, hier eine Stromversorgung in Form einer Batterie auswechselbar einzusetzen. Um bei einem zusammengefügten Gehäuse die Auswechselbarkeit der Batterie zu erleichtern, befindet sich seitlich an einer Seitenwand ein Durchbruch, der es gestattet, beim Eindringen mit einem Bauteil, die in einer Halterung befestigte Batterie aus dem Gehäuse herauszudrücken. Somit ist eine einfache Auswechselbarkeit zu gegebener Zeit möglich.

Damit das zweiteilige Gehäuse aus der Deckplatte und der Rückplatte die untereinander vorzugsweise rastend miteinander verbunden sind, ein gefälliges Aussehen aufweist, werden diese zusammengefügten Bauteile durch ein rahmenförmiges Verbindungsteil außen umgeben. Das Verbindungsteil hält dabei die Deckplatte und die Rückplatte sicher zusammen, weil diese innerhalb des Verbindungsteils nicht unbeabsichtigt auseinander gebracht werden können. Dieses geschieht durch innerhalb des Verbindungsteils vorhandene Vertiefungen, in die Vorsprünge oder Rasten der Gehäuseteile eingreifen. Damit das Einrasten auch sicher ausgeführt werden kann, muss das zweiteilige Gehäuse von einer Seite in das Verbindungsteil eingesetzt werden. Dafür weist das Verbindungsteil aufgrund seiner rahmenförmigen Ausbildung einen freien Raum auf, der an einer der Außenseiten des Verbindungsteils mit einem umlaufenden Vorsprung ausgestattet ist. Somit wird beim Eindrücken des zusammengefügten Gehäuses dieses in das Verbindungsteil gegen diesen umlaufenden Vorsprung gedrückt und kann somit nicht unbeabsichtigt hindurchgedrückt werden.

Bei dem Verbindungsteil gibt es unterschiedliche Ausführungen. Eine erste bevorzugte Ausführungsform besteht aus einem geschlossenen Rahmen, der aus parallel verlaufenden Seitenwänden und dazu angeordneten parallel verlaufenden Stirnseiten besteht. In dem Bereich, wo eine Seitenwand und eine Stirnwand zusammen kommen, ist eine Abrundung vorhanden. Dadurch, dass die Oberfläche sowohl der Deckplatte als auch der Rückplatte einen gebogenen oder balligen Verlauf aufweisen, zieht sich dieser Verlauf auch in die oberen und unteren Ränder in das Verbindungsteil fort; eine Ausführung mit geraden Oberflächen ist ebenfalls möglich. Die Ausführung bei einem geschlossenen Verbindungsteil besteht dabei aus einem Kunststoff oder einem nicht metallischen Werkstoff.

In einer weiteren bevorzugten Ausführungsform ist es möglich, eine Aufwertung des Handsenders dadurch zu erreichen, dass das Verbindungsteil aus Metall oder Edelstahl hergestellt wird. In einem solchen Falle ist es jedoch notwendig, dass für den ordnungsgemäßen Gebrauch die durch den Sender erzeugten Funksignale auch nach außerhalb des Handsenders gelangen können. Dieses kann dadurch erreicht werden, dass beispielsweise eine Stirnseite des Verbindungsteils eine Öffnung aufweist, um so einen Austritt für die Funksignale aus dem Handsender zu realisieren.

Ein derartiger Handsender kann mit einer Vielzahl von Bedienelementen ausgestattet werden, die unterschiedliche Funktionen ausführen können. Dieses können neben Einleitung eines Öffnungs- oder Schließvorganges des entsprechend kommunizierenden Antriebes mit Empfänger des Gebäudeverschlusses, auch die Einschaltung von Sonderfunktionen, wie Licht innerhalb des Gebäudes oder dergleichen beinhalten. Dadurch, dass von der bedienenden Person eine freie Belegbarkeit und Programmierbarkeit der Bedienelemente möglich ist, ist eine universelle Verwendbarkeit gegeben. Zur Programmierbarkeit weist der Handsender mindestens ein Anzeigeelement auf, welches vorzugsweise hinter der durchscheinenden Deckplatte angeordnet ist.

In einer weiteren bevorzugten Ausführungsform kann der grundsätzliche Aufbau des Handsenders durch ein Trägerelement geprägt werden, welches quasi die Aufgabe des Verbindungsteils übernimmt. Dabei ist auf der Vorderseite eine Deckplatte und auf der Hinterseite eine Rückplatte so eingebettet, dass ein allseits vorhandener sichtbarer Seitenrand um die Deckplatte und auch die Rückplatte durch das Trägerelemente selbst gebildet wird. Eine derartige Vorgehensweise kann die Herstellkosten senken, da aufgrund der Konstruktion des Trägerelementes die Deckplatte bzw. die Rückplatte sich einfach einsetzen lassen. Zwischen Deckplatte und Rückplatte befindet sich auf einer Platine eine elektronische Schaltung mit dem Funksender.

Um eine derartige Konstruktion ausführen zu können, ist das Trägerelement so ausgebildet, dass der umlaufende Rand so geprägt wird, dass zum Innern des Handsenders Rücksprünge in einer Dimension vorhanden sind, die ermöglicht, dass die Deckplatte und die Rückplatte dort eingesetzt werden können, damit diese bündig mit der Oberfläche des umlaufenden Randes des Trägerelementes abschließen.

Auch bei dieser Ausführung kann die Oberfläche der Deckplatte und der Rückplatte ballig oder plan ausgeführt werden, wobei sich die Ausführungsform in den Rand des Trägerelementes hinein fortsetzt.

Eine derartige Konstruktion zeichnet sich durch seine klare Formgestaltung aus, die vorzugsweise rechteckig ausgebildet ist. Dieses lässt eine unproblematische Bedienbarkeit der innerhalb der Deckplatte vorhandenen Bedienelemente des Handsenders zu. Ein derartiger Handsender liegt gefällig in einer bedienenden Hand und es kann durch die in Längsrichtung hintereinander angeordneten Bedienelemente einfach bedient werden. Die Bedienelemente weisen dafür vorzugsweise Vertiefungen in sich auf, die leicht durch einen Finger ertastet werden können und eine Druckbeaufschlagung auf die darunterliegenden Taster der elektronischen Platine weitergeben.

Aufgrund der Teilung zwischen Deck- und Rückplatte und der Gestaltung des Trägerelementes ist es möglich, diese in unterschiedlichen Materialien und auch mit unterschiedlichen Farbgestaltungen auszustatten. Dieses trifft auch für die bereits vorbeschriebene Ausführungsform zu. So ist es möglich, dass die Deckplatte und auch die Rückplatte an ihrer Oberfläche beispielsweise mit einem metallischen oder einem anderen Überzug behaftet sind.

In einer weiteren bevorzugten Ausführungsform ist es möglich, den Rand des Trägerelementes und beispielsweise auch die Bedienelemente mit einem Überzug zu versehen, der ein angenehmes, softiges Tastgefühl vermittelt.

Die Erfindung wird nachfolgend anhand der dargestellten Ausführungsbeispiele näher erläutert.

Es zeigt:
- Figur 1:: Eine erste Ausführung eines Handsenders in der Vorderansicht;
- Figur 2:: die Ausführung des Handsenders nach Figur 1 in der Seitenansicht;
- Figur 3:: die Ausführung des Handsenders nach Figur 1 in der Draufsicht;
- Figur 4:: einen Schnitt B-B gemäß Figur 1 durch den Handsender;
- Figur 5:: einen Schnitt A-A gemäß Figur 1 durch den Handsender;
- Figur 6:: eine perspektivische Darstellung einer weiteren bevorzugten Ausführungsform;
- Figur 7:: eine Explosionszeichnung der Ausführungsform nach Figur 6;
- Figur 8:: eine weitere bevorzugte Ausführungsform eines Handsenders in perspektivischer Darstellung;
- Figur 9:: eine Explosionsdarstellung der Ausführungsform nach Figur 8;
- Figur 10:: eine weitere bevorzugte Ausführungsform eines Handsenders in perspektivischer Darstellung;
- Figur 11:: eine Explosionsdarstellung der Ausführungsform nach Figur 10;
- Figur 12:: eine Ausführungsform eines Verbindungsteils in perspektivischer Darstellung.

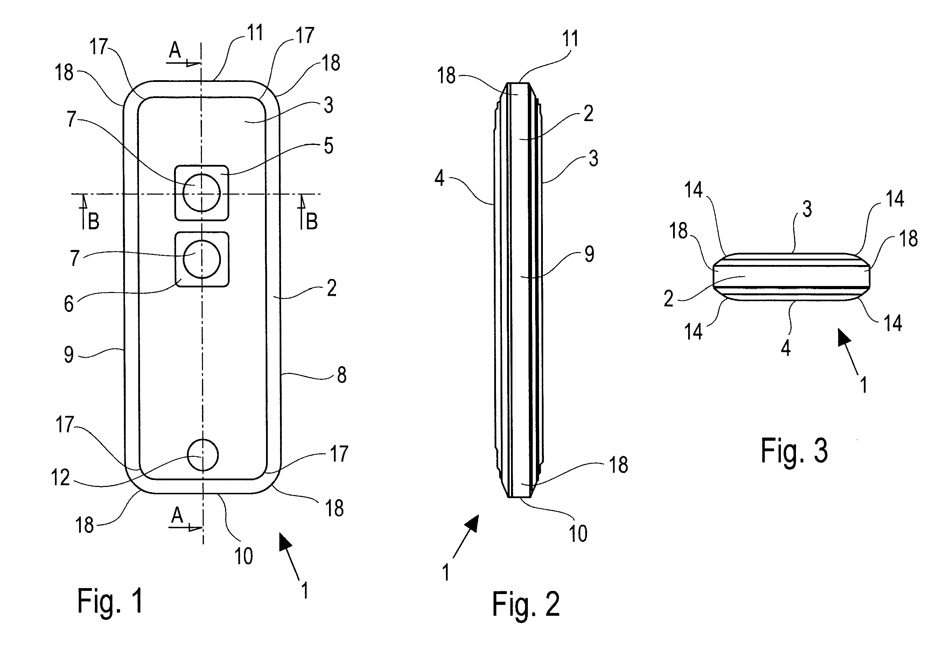

Die Figur 1 zeigt einen Handsender 1, der ein klares Erscheinungsbild dadurch aufweist, dass dieser aus einer rechteckigen Form gebildet wird. Die rechteckige Form wird dadurch erreicht, dass Seitenränder 8, 9 im Wesentlichen parallel zueinander verlaufen und an ihren Enden durch Abrundungen 18 in ebenfalls im Wesentlichen parallel zueinander verlaufende Seitenränder 10, 11 übergehen.

Der Handsender 1 wird in seinem Mittenbereich durch ein Trägerelement 2 geprägt. Dieses kann deutlich der Figur 2 entnommen werden. Innerhalb des Trägerelementes 2 ist eine Deckplatte 3 eingesetzt, die mit Bedienelementen 5, 6 versehen ist. Die Bedienelemente 5, 6 weisen dabei vorzugsweise Vertiefungen 7 auf, um eine Bedienung eindeutig auch bei schlechter Beleuchtung ausführen zu können. Das Trägerelement 2 bildet einen parallel verlaufenden, um die Deckplatte 3 herum laufenden Rand aus. Dies ist auch in den Eckbereichen, in denen die Deckplatte 3 Abrundungen 17 aufweist, ausgeführt. In analoger Weise ist auf der gegenüberliegenden Seite der Deckplatte 3 eine Rückplatte 4 mit dem Trägerelement 2 verbunden. Der Handsender 1 weist ferner eine Bohrung 12 auf, die sowohl die Deckplatte als auch die Rückplatte und bereichsweise auch das Trägerelement 2 durchdringt. Die Bohrung 12 ist beispielsweise zur Befestigung des Handsenders an einem Schlüsselbund oder dergleichen gedacht.

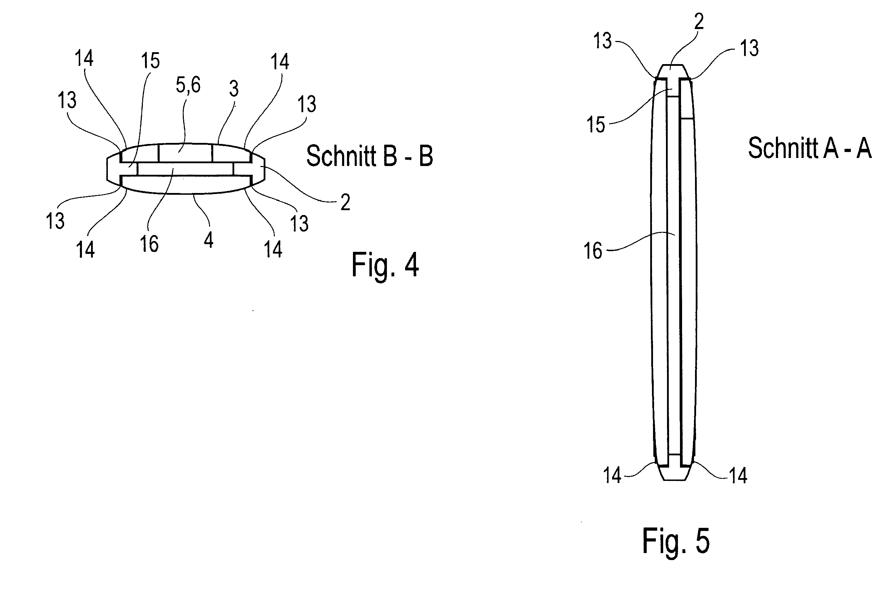

Wie die Darstellungen der Figuren 2 und 3 deutlich machen, sind die Oberflächen der Deckplatte 3 und der Rückplatte 2 quasi parallel verlaufend ausgebildet und weisen vorzugsweise einen leicht balligen Oberflächenverlauf 14 zu den Rändern des Trägerelementes 2 hin auf. Dieser Verlauf 14 der Oberfläche kann insbesondere auch den Figuren 4 und 5 entnommen werden.

Der grundsätzliche Aufbau des Handsenders 1 wird durch das mittig angeordnete Trägerelement 2 geprägt. Das Trägerelement 2 kann insbesondere durch die Schnittdarstellungen der Figuren 4 und 5 verdeutlicht werden. Dabei ist das Trägerelement 2 in den Schnittdarstellungen A-A und B-B in den Randbereichen quasi als T-förmiges Bauteil dargestellt worden. Dieses ergibt sich dadurch, dass gegenüber den Seitenrändern 8, 9, 10, 11 ein Rücksprung 13 zum Inneren vorhanden ist. Dieser Rücksprung 13 ist maßlich so auf die Deckplatte 3 und die Rückplatte 4 abgestimmt, dass diese in einem Mittenbereich 15 des Trägerelementes 2 in ihrer Kontur enden. Der Mittenbereich 15 wird zur Aufnahme von elektronischen Bauteilen, wie der elektronischen Platine mit Tastern, bzw. einer Batterie, innerhalb eines Durchbruches 16 ausgenutzt.

Durch eine derartige Gestaltung des Handsenders 1, in Verbindung mit dem Trägerelement 2 und der Deckplatte 3 und der Rückplatte 4, kann ein preiswerter Handsender 1 geschaffen werden, der durch ein sehr gefälliges Aussehen gekennzeichnet ist.

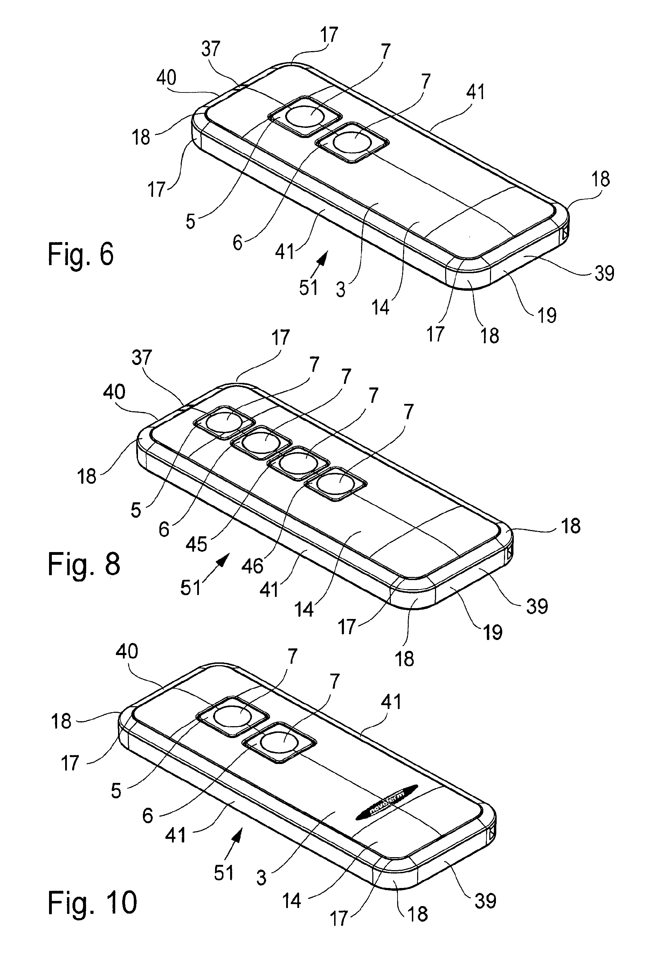

In einer modifizierten bevorzugten Ausführungsform wird gemäß Figur 6 ein Handsender 51 mit der Deckplatte 3 und der Rückplatte 4 wiedergegeben. Statt des Trägerelementes 2 ist ein an den Rändern der Deckplatte 3 und der Rückplatte 2 umschließendes Verbindungsteil 19 befestigt. Innerhalb der unter einem leichten Kurvenverlauf oder im Wesentlichen eben verlaufenden Deckplatte 3 sind Bedienelemente 5 und 6 eingearbeitet, die in ihrem Mittenbereich vorzugsweise eine Vertiefung 7 aufweisen. Bei dieser Ausführungsform des Handsenders 51 handelt es sich auch um ein im Wesentlichen von der Grundform rechteckiges Gebilde, dessen umfassendes Verbindungsteil 19 an den Eckbereichen durch Abrundungen 18 mit dazwischen liegenden parallel ausgeführten Stirnseiten 39, 40 und parallel verlaufenden Seitenwänden 41 besteht. Bei dem Ausführungsbeispiel nach Figur 6 weist an der Stirnseite 40 das Verbindungsteil 19 eine Öffnung 20 auf, die in ihrer Formgestaltung durch einen Ansatz 37, der an die Deckplatte 3 angeformt ist, ausgefüllt wird. Durch diese Vorgehensweise wird quasi ein umschlossener Raum erzeugt.

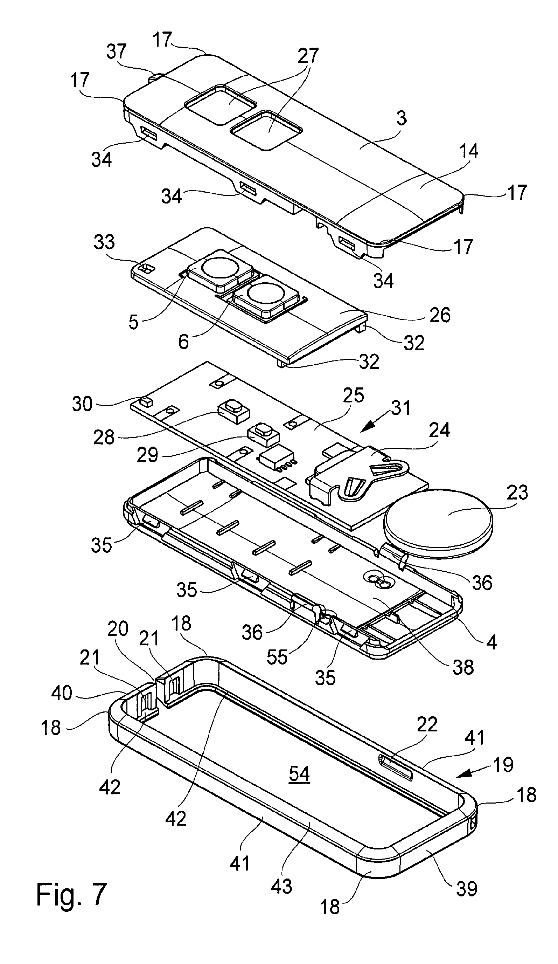

Die Ausführungsform gemäß Figur 6 ist in einer Explosionszeichnung nach Figur 7 im Detail wiedergeben worden. Dabei besteht das Gehäuse aus der Deckplatte 3 und der Deckplatte 4, die untereinander durch Durchbrüche 34 und an dem anderen Teil vorhandenen Rasthaken 35 untereinander verbunden werden. Innerhalb der Rückplatte 4 liegt auf einem Boden 38 eine elektronische Schaltung 31 in Form einer Platine 25 auf. Auf der Platine 25 sind Tastelemente 28, 29 neben anderen elektronischen Bauteilen, wie insbesondere der Einrichtung für die Sendeeinheit, enthalten. Ferner ist eine Anzeige 30 in Form einer LED-Anzeige auf der Platine 25 angeschlossen. Für eine Stromversorgung 23 des Handsenders 51 ist eine Halterung 24 vorhanden. Die Halterung 24 ist auf der Platine 25 so platziert, dass die Stromversorgung 23 in Form einer Batterie beispielsweise über eine Stirnseite nach Entfernung des Verbindungsteils 19 eingesetzt werden kann. Zur Entfernung einer nicht mehr funktionsfähigen Stromversorgung 23 ist an einer Längsseite des Gehäuses eine Öffnung 55 vorhanden, in die ein Element oder Werkzeug eingebracht wird, um die Stromversorgung 23 aus ihrer Halterung 24 herauszudrücken.

Mit der Platine 25 steht in Wirkverbindung ein Zwischenstück 26, das sich über Abstützungen 32 sich auf der Platine 25 in einer definierten Distanz abstützt. Innerhalb des Zwischenstücks 26 sind die Bedienelemente 5 und 6 in Form von Folientastern oder dergleichen eingearbeitet. Durch die Druckbetätigung eines der Bedienelemente 5 oder 6 oder beider Bedienelemente wird diese Druckbeaufschlagung auf den oder die darunter befindlichen Tastelemente 28 und/oder 29 übertragen. Das so ausgelöste Signal wird über die elektronische Schaltung 31 verarbeitet und über die Anzeige 30 angezeigt sowie über den nicht näher bezeichneten Sender codiert abgegeben. Verschlossen wird das Gehäuse durch die Deckplatte 3 über die Durchbrüche 34 in Verbindung mit den Rasthaken 35. Somit wird durch das Gehäuse eine funktionsfähige Einheit bereitgestellt, die zum Schutz in ihren äußeren Begrenzungen durch das Verbindungsteil 19 abgeschlossen wird.

Bei einer Ausführung des Verbindungsteils 19 in einer Metall- oder Edelstahlausführung ist es notwendig, dass zur Abgabe des drahtlosen Funksignals die Öffnung 20 vorhanden ist. Das Verbindungsteil 19 weist dabei die gleiche Formgebung in rechteckiger Art wie der Handsender 51, bestehend aus der Deckplatte 3 und der Rückplatte 4, die untereinander verbunden sind, auf. Um einen ordnungsgemäßen Halt innerhalb des Verbindungsteils 19 zu gewährleisten, weist das Verbindungsteil 19 einen einseitigen umlaufenden Vorsprung 42 zu dem Raum 54 auf, der verhindert, dass beim Einsetzen des Gehäuses dieses quasi durchgedrückt werden könnte. Somit ist das Gehäuse innerhalb des Verbindungsteils 19 sicher eingebettet. Um ein unbeabsichtigtes Entfernen aus dem Verbindungsteil 19 zu unterbinden, sind innerhalb der Stirnseite 40 im Bereich der Öffnung 20 Vertiefungen 21 eingebracht. Ebenso ist in dem hinteren Teil zur Stirnseite 39 hin auch im Inneren des Verbindungsteils 19 seitlich jeweils eine Vertiefung 22 vorhanden. Wird nun das Gehäuse eingesetzt, so wird zuerst über den Ansatz 37 ein Kontakt mit der Öffnung 20 und damit gleichzeitig auch in den Vertiefungen 21 mit komplementären Vorsprüngen an der Deckplatte 3 erreicht. Durch das schräge Einsetzen in das Verbindungsteil 19 wird anschließend eine Verrastung von Rasten 36, die an der Rückplatte 4 angeformt sind, in Verbindung mit den Vertiefungen 22, erreicht.

Das Verbindungsteil 19 weist parallel verlaufende Seitenwände 41 auf, zu denen im rechten Winkel die Stirnseite 39 und die Stirnseite 40 ausgebildet sind. Die Stirnseiten und die Seitenwände werden durch Abrundungen 18 miteinander verbunden. Analog zu den Abrundungen 18 sind sowohl an der Deckplatte 3 als auch an der Rückplatte 4 Abrundungen 17 vorhanden. Dadurch, dass die Oberflächen der Deckplatte 3 und der Rückplatte 4 einen leichten gebogenen Verlauf 14 aufweisen, setzt sich dieser Verlauf 14 oder eine Schräge in das Verbindungsteil 19 über einen Verlauf 43 an beiden Seiten, d. h. oben und unten fort. So wird durch das komplette Vorhandensein des Handsenders 51 mit dem Verbindungsteil 19 ein gefälliges Bauteil für eine einfache Bedienung geschaffen.

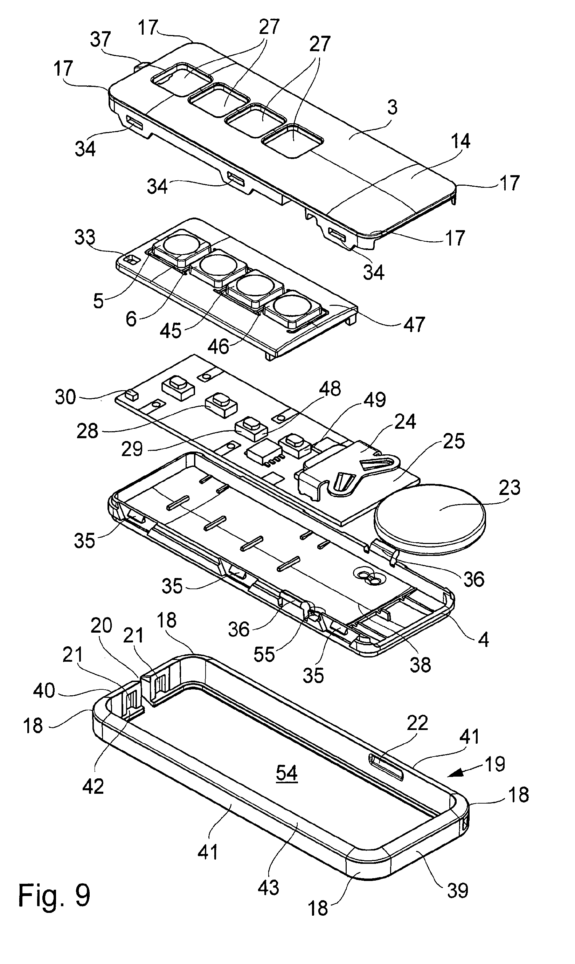

In den Figuren 8 und 9 ist eine modifizierte Art des Handsenders 51 dargestellt worden. Diese modifizierte Art unterscheidet sich dadurch, dass innerhalb der Deckplatte 3 Bedienelemente 5, 6, 45, 46 vorhanden sind. Die Belegung und die Funktionen der einzelnen Bedienelemente 5, 6, 45, 46 kann durch den Benutzer frei programmiert bzw. gewählt werden. So ist es möglich, gleichzeitig mit einem Handsender 51 mehrere Antriebseinheiten fernbedienen zu können. Es versteht sich, dass neben den Tastelementen 28, 29 für die Bedienelemente 45, 46 Tastelemente 48, 49 für die Bedienelemente 45, 46 vorhanden sind. Ansonsten ist diese bevorzugte Ausführungsform gemäß der Figuren 8 und 9 in gleiche Art und Weise aufgebaut wie die Ausführungsform gemäß den Figuren 6 und 7.

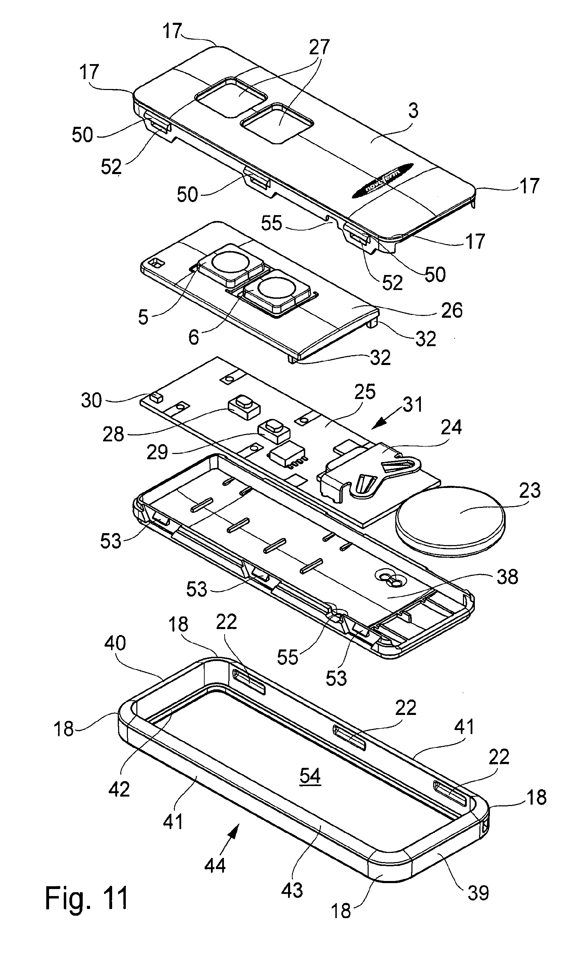

Die Figuren 10 und 11 geben eine weitere bevorzugte Ausführungsform wieder, bei der ein modifiziertes Verbindungsteil 44 statt des Verbindungsteils 19 zur Anwendung kommt. Dieses Verbindungsteil 44 kann aufgrund seiner Materialwahl als Kunststoffteil oder ergleichen ausgeführt werden und ist als geschlossener Rahmen ausgeführt. Dieses bedeutet, dass die Stirnseite 40 nicht unterbrochen ist.

Eine derartige Ausführung eines Handsenders 51 wird schräg an einer der Seitenwände 41 eingesetzt und über Vertiefungen 22 und Rasthaken 53 miteinander verbunden.

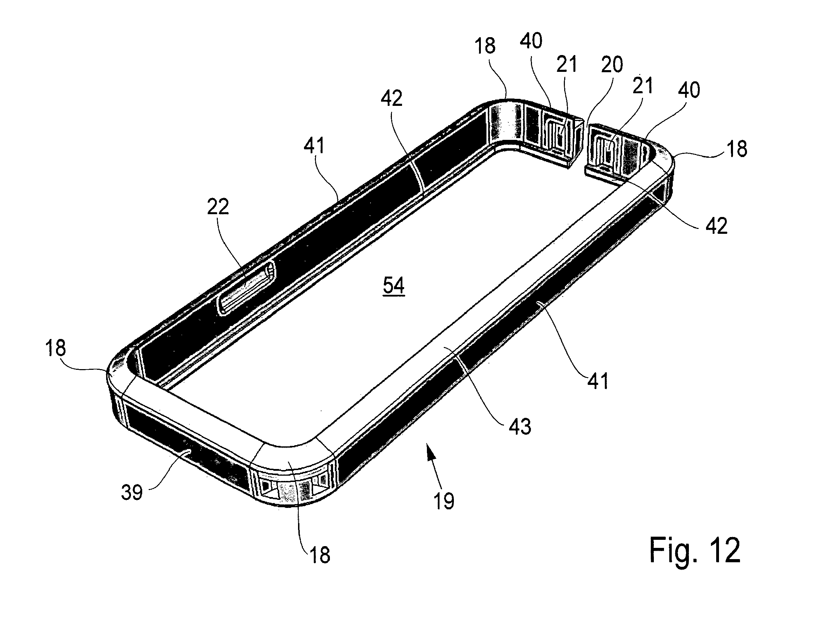

In einer Einzeldarstellung ist das Verbindungsteil 19 in der Figur 12 noch einmal dargestellt worden. Hier wird deutlich, dass die Oberflächen einen Verlauf 43 aufweisen und somit eine harmonische Formfortsetzung der Deckplatte 3 und der Rückplatte 4 aufzeigen. Durch die Begrenzungen der Vorsprünge 42 wird in dem Verbindungsteil 19 innen ein Raum 54 geschaffen, der beidseitig geöffnet ist und an einer Seite zu dem Raum 54 weisend durch die umlaufenden Vorsprünge 42 an den Seitenwänden 41 und der Stirnseite 39 und der Stirnseite 40 begrenzt wird.

### Bezugszeichen

- 1: Handsender
- 2: Trägerelement
- 3: Deckplatte
- 4: Rückplatte
- 5: Bedienelement
- 6: Bedienelement
- 7: Vertiefung
- 8: Seitenrand
- 9: Seitenrand
- 10: Seitenrand
- 11: Seitenrand
- 12: Bohrung
- 13: Rücksprung
- 14: Verlauf
- 15: Mittenbereich
- 16: Durchbruch
- 17: Abrundung
- 18: Abrundung
- 19: Verbindungsteil
- 20: Öffnung
- 21: Vertiefung
- 22: Vertiefung
- 23: Stromversorgung
- 24: Halterung
- 25: Platine
- 26: Zwischenstück
- 27: Durchbruch
- 28: Tastelement
- 29: Tastelement
- 30: Anzeige
- 31: Elektrische Schaltung
- 32: Abstützung
- 33: Durchbruch
- 34: Durchbruch
- 35: Rasthaken
- 36: Raste
- 37: Ansatz
- 38: Boden
- 39: Stirnseite
- 40: Stirnseite
- 41: Stirnwand
- 42: Vorsprung
- 43: Verlauf
- 44: Verbindungsteil
- 45: Bedienelement
- 46: Bedienelement
- 47: Halterung
- 48: Tastelement
- 49: Tastelement
- 50: Rasthaken
- 51: Handsender
- 52: Durchbruch
- 53: Rasthaken
- 54: Raum
- 55: Öffnung

## Patentansprüche

1. Drahtloser, mittels mindestens eines Funksignals zu betreibender Handsender (51) zur Kommunikation mit einem Empfänger einer Antriebseinheit, die einem Gebäudeverschluss, vorzugsweise einem Tor zugeordnet ist, mit einem Gehäuse in dem vorhandenen Bedienelemente (5, 6, 45, 46) angeordnet sind, wobei das Gehäuse mit einer lösbaren, seitlich aufschiebbaren Abdeckung versehen ist, **dadurch gekennzeichnet, dass** der Handsender (51) im Wesentlichen aus einem zweiteiligen Gehäuse mit einer Deckplatte (3) und damit lösbar verbundenen Rückplatte (4) besteht, wobei innerhalb des Gehäuses eine Platine (25) enthalten ist, auf der Tastelemente (28, 29, 48, 49) angeordnet sind, die durch in einem Zwischenstück (26) integrierte Bedienelemente (5, 6, 45, 46) beaufschlagbar sind, wobei die Bedienelemente (5, 6, 45, 46) an der Oberfläche der Deckplatte (3) austreten, und dass die Platine (25) eine Halterung (24) für eine auswechselbare Stromversorgung (23) aufweist, und dass die Deckplatte (3) und die Rückplatte (4) umfassend oder mit einer Öffnung (22) versehen, zum Wechseln der Stromversorgung (23) entfernbar, von einem rahmenförmigen Verbindungsteil (19, 44) umgeben ist.

2. Drahtloser, mittels mindestens eines Funksignals zu betreibender Handsender (1) zur Kommunikation mit einem Empfänger einer Antriebseinheit, die einem Gebäudeverschluss, vorzugsweise einem Tor zugeordnet ist, mit einem Gehäuse in dem Bedienelemente (5, 6) angeordnet sind, wobei das Gehäuse mit einer lösbaren, seitlich aufschiebbaren Abdeckung versehen ist, **dadurch gekennzeichnet, dass** der Handsender (1) ein Trägerelement (2) aufweist, in dem eine Deckplatte (3) mit den Bedienelementen (5, 6) und eine Rückplatte (4) so eingebettet sind, dass umfassend vorstehende, sichtbare Seitenränder (8, 9, 10, 11) des Trägerelements (2) gebildet werden.

3. Handsender nach Anspruch 1, **dadurch gekennzeichnet, dass** die Deckplatte (3) und die Rückplatte (4) des Gehäuses durch Rasthaken (35) und damit zusammenwirkenden Durchbrüchen (34) untereinander lösbar verbunden sind, wobei an einer Stirnseite eine Öffnung zum Austausch der Stromversorgung (23) vorhanden ist.

4. Handsender nach Anspruch 1, **dadurch gekennzeichnet, dass** die Öffnung (20) des aufgesetzten Verbindungsteils (19) über die Deckplatte (3) und die Rückplatte (4) durch einen Ansatz (37) an der Deckplatte (3) ausgefüllt wird.

5. Handsender nach Anspruch 1 und 4, **dadurch gekennzeichnet, dass** das Verbindungsteil (19) aus Metall oder Edelstahl oder Stahl besteht und über die Rückplatte (4) auf das Gehäuse aufsetzbar und durch Vertiefungen (21, 22) in Verbindung mit Rasten (36) einsetzbar ist und nach dem Verrasten gegenüber einem umlaufenden Vorsprung (42) gehalten wird.

6. Handsender nach Anspruch 1, **dadurch gekennzeichnet, dass** das Verbindungsteil (44) aus einem nicht metallischen Werkstoff, vorzugsweise Kunststoff, besteht und in sich geschlossen ist und durch Vertiefungen (22) und Rasthaken (53) mit dem Gehäuse lösbar verbunden ist.

7. Handsender nach Anspruch 1, 5 oder 6, **dadurch gekennzeichnet, dass** das Verbindungsteil (19, 44) eine rechteckige Form aufweist und ausgehend von im Wesentlichen geraden, parallelen Seitenwänden und Stirnseiten (39, 40) zu der Deckplatte (3) und der Rückplatte (4) einen Verlauf (43) aufweisen, die sich in der Deckplatte (3) und der Rückplatte (4) als Verlauf (14) fortsetzen.

8. Handsender nach Anspruch 1 und 7, **dadurch gekennzeichnet, dass** das Verbindungsteil (19, 44) ausgehend von den Seitenwänden (41) und den Stirnseiten (39, 40) einseitig einen zu einem inneren freien Raum (54) gerichteten umlaufenden Vorsprung (42) aufweist.

9. Handsender nach Anspruch 2, **dadurch gekennzeichnet, dass** das Trägerelement (2) im Wesentlichen rahmenförmig ausgebildet ist und in dem umschlossenen Raum ein Durchbruch (16) vorhanden ist, und dass die Ränder (8, 9, 10, 11) zum Inneren des Trägerelementes (2) gerichtete Vorsprünge (13) zur Aufnahme der Deckplatte (3) und der Rückplatte (4) aufweisen.

10. Handsender nach Anspruch 2, **dadurch gekennzeichnet, dass** das Trägerelement (2) eine rechteckige Form aufweist, wobei die Seitenränder (8, 9) und die Seitenränder (10, 11) im Wesentlichen jeweils parallel zueinander verlaufen und an den Ecken Abrundungen (18) aufweisen.

11. Handsender nach Anspruch 9, **dadurch gekennzeichnet, dass** die Seitenränder (8, 9, 10, 11) gegenüber der Deckplatte (3) und der Rückplatte (4) sichtbar sind und mit einem Abstand parallel zu diesem verlaufen.

12. Handsender nach einem der vorhergehenden Ansprüche, **dadurch gekennzeichnet, dass** die Deckplatte (3) und die Rückplatte (4) in ihrem Mittenbereich in Längsrichtung einen annährend geraden Verlauf aufweisen, der zu den Rändern in einen verrundeten oder geschwungenen Verlauf (14) übergeht.

13. Handsender nach einem der vorhergehenden Ansprüche, **dadurch gekennzeichnet, dass** die Bedienelemente (5, 6, 45, 46) eine quadratische oder runde Form aufweisen und in ihrer Mitte mit einer Vertiefung (7) versehen sind und mit der Oberfläche der Deckplatte (3) abschließen.
